(19) Europäisches Patentamt
European Patent Office
Office européen des brevets

(11) Veröffentlichungsnummer: **0 042 112**
**B1**

(12) # EUROPÄISCHE PATENTSCHRIFT

(45) Veröffentlichungstag der Patentschrift: **28.03.84**

(51) Int. Cl.³: **C 08 F 2/38** // (C08F2/38, 20/06, 20/56)

(21) Anmeldenummer: **81104305.8**

(22) Anmeldetag: **04.06.81**

(54) **Telomerisation von wasserlöslichen Monomeren.**

(30) Priorität: **12.06.80 DE 3022044**

(43) Veröffentlichungstag der Anmeldung: **23.12.81 Patentblatt 81/51**

(45) Bekanntmachung des Hinweises auf die Patenterteilung: **28.03.84 Patentblatt 84/13**

(84) Benannte Vertragsstaaten: **BE DE FR GB IT NL**

(56) Entgegenhaltungen:
**US - A - 3 665 035**
**US - A - 3 862 975**

**CHEMICAL ABSTRACTS, Band 83, Nr. 10, 8. September 1975, Seite 49, Nr. 80280t Columbus, Ohio, U.S.A.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Höfer, Rainer, Dr., Kleverstrasse 31, D-4000 Düsseldorf (DE)**
Erfinder: **Wilk, Hans-Christoph, Dr., Görlitzer Strasse 5, D-4040 Neuss (DE)**
Erfinder: **Wegemund, Bernd, Dr., Händelweg 3, D-5657 Haan (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 042 112 B1

Telomerisation von wasserlöslichen Monomeren

Gegenstand der Erfindung ist ein Verfahren zur Telomerisation von wasserlöslichen Monomeren in wässeriger Phase unter Verwendung von praktisch in Wasser unlöslichen Telogenen.

Es ist bekannt, die Telomerisation im wässerigen Medium unter Verwendung wasserlöslicher Telogene und wasserlöslicher Monomere durchzuführen, z.B. mit Mercaptoethanol bzw. Thioglycolsäure und Acrylsäure (vgl. US-A Nr. 3665035). Weiter ist es bekannt, die Telomerisation von wasserlöslichen Monomeren wie Acrylsäure und wasserunlöslichen Telogenen wie Dodecylmercaptan in einem organischen Lösungsmittel, in dem alle Reaktanten löslich sind, vorzunehmen. Dabei können die anfallenden Polymerisate im verwendeten Lösungsmittel unlöslich sein, so dass eine Fällungspolymerisation stattfindet.

Nach dem zuerst genannten Verfahren lassen sich in wässeriger Lösung Telomere zwar mit in weiten Grenzen regelbarem Molekulargewicht herstellen, es ist jedoch auf Telogene begrenzt, die bei der Polymerisationstemperatur vollständig wasserlöslich sind. Die gezielte Einführung eines langkettigen Telogenrestes, der für viele Anwendungen benötigt wird, gelingt nicht auf diese Weise. Auch durch Zugabe wasserunlöslicher Telogene in fein verteilter Form als Emulsion oder Suspension zu wässerigen Monomerlösungen sind solche Produkte nicht herstellbar.

Das zweite Verfahren ist prinzipiell zur Herstellung von Telomerisaten aus wasserunlöslichen Telogenen und wasserlöslichen Monomeren geeignet. Das Arbeiten in organischen Lösungsmitteln erfordert jedoch in der Technik besondere Sicherheitsvorkehrungen. Darüber hinaus stört das Lösungsmittel bei wichtigen Anwendungen der Telomeren etwa dem Einsatz als oberflächenaktive Substanz. Die Produkte müssen demzufolge durch Fällung oder Abdestillieren des Lösungsmittels isoliert und vor Anwendung wieder in Wasser gelöst werden. Das bereitet bei manchen Produkten zusätzliche Aufwendungen.

Aufgabe der vorliegenden Erfindung war die Entwicklung eines Verfahrens zur Herstellung von Telomerisaten aus wasserlöslichen Monomeren und wasserunlöslichen Telogenen, insbesondere Mercaptanen in wässeriger Phase. Dabei sollte insbesondere die Verwendung von organischen Lösungsmitteln vermieden werden. Weiterhin sollte das neue Verfahren direkt zu gebrauchsfertigen Lösungen von Telomerisaten in Wasser führen.

Erfindungsgemäss wird die Telomerisation so durchgeführt, dass man praktisch wasserunlösliche Telogene durch Zusatz von solchen Mengen an oberflächenaktiven Verbindungen solubilisiert, die eine hydrotrope Wirkung entfalten.

Bevorzugt verwendet man, bezogen auf Telogen 10 bis 150, insbesondere 40 bis 100 Gew.-% an oberflächenaktiven Verbindungen.

Nach einer bevorzugten Ausführungsform werden als Telogene 1 bis 4 Mercaptogruppen sowie 1 bis 2 Hydroxygruppen im Molekül enthaltende Verbindungen verwendet, die ein Alkyl- bzw. Alkylarylgerüst von 3 bis 20 Kohlenstoffatomen pro Mercapto- bzw. Hydroxygruppe enthalten. Als Telogene bzw. Regler sind beispielsweise geeignet: 1-Mercapto-2-hydroxyalkane wie 1-Mercapto-2-hydroxyoctan, -nonan, -decan, -undecan etc., aber auch gängige Alkylmercaptane mit $C > 7$. Die wenigstens 1 Mercaptogruppe enthaltenden Verbindungen können neben der Hydroxylgruppe auch weitere funktionelle Gruppen wie Carboxylgruppen, Aldehydfunktion, Arylreste, Nitrogruppen oder Halogen enthalten.

Als oberflächenaktive Verbindungen eignen sich praktisch alle bekannten ionischen und nichtionischen Netzmittel bzw. Tenside.

Diese Tenside enthalten im Molekül wenigstens einen hydrophoben organischen Rest und eine wasserlöslich machende anionische, zwitterionische oder nichtionische Gruppe. Bei dem hydrophoben Rest handelt es sich meist um einen aliphatischen Kohlenwasserstoffrest mit 8 bis 26, vorzugsweise 10 bis 22 und insbesondere 12 bis 18 C-Atomen, oder um einen alkylaromatischen Rest mit 6 bis 18, vorzugsweise 8 bis 16 aliphatischen C-Atomen.

Als anionische Tenside sind z.B. Seifen aus natürlichen oder synthetischen, vorzugsweise gesättigten Fettsäuren, gegebenenfalls auch aus Harz- oder Naphthensäuren brauchbar. Geeignete synthetische anionische Tenside sind solche vom Typ der Sulfonate, Sulfate und der synthetischen Carboxylate.

Als Tenside vom Sulfonattyp kommen Alkylbenzolsulfonate ($C_9$ bis $C_{15}$-Alkyl), Gemische aus Alken- und Hydroxyalkansulfonaten sowie Disulfonaten, wie man sie beispielsweise aus Monoolefinen mit en- oder innenständiger Doppelbindung durch Sulfonieren mit gasförmigem Schwefeltrioxid und anschliessende alkalische oder saure Hydrolyse der Sulfonierungsprodukte erhält, in Betracht. Weiter eignen sich Alkansulfonate, die aus Alkanen durch Sulfochlorierung oder Sulfoxidation und anschliessende Hydrolyse bzw. Neutralisation bzw. durch Bisulfitaddition an Olefine erhältlich sind. Weitere brauchbare Tenside vom Sulfonattyp sind die Ester von $\alpha$-Sulfofettsäuren, z.B. die $\alpha$-Sulfonsäuren aus hydrierten Methyl- oder Ethylestern der Kokos-, Palmkern- oder Talgfettsäure.

Geeignete Tenside vom Sulfattyp sind die Schwefelsäuremonoester primärer Alkohole (z.B. aus Kokosfettalkoholen, Talgfettalkoholen oder Oleylalkohol) und diejenigen sekundärer Alkohole. Weiterhin eignen sich sulfatierte Fettsäurealkanolamide. Fettsäuremonoglyceride oder insbesondere sulfatierte Addukte von 2 bis 40 mol Ethylenoxid an primäre oder sekundäre Fettalkohole oder Alkyl-($C_6$ bis $C_9$)-phenole.

Die anionischen Tenside können in Form ihrer wasserlöslichen Salze wie Natrium-, Kalium- und Ammoniumsalze sowie als Salze organischer Basen wie Mono-, Di- oder Triethanolamin vorliegen.

Als nichtionische Tenside sind Anlagerungsprodukte von 4 bis 40, vorzugsweise 4 bis 20 mol Ethylenoxid an 1 mol Fettalkohol, Alkylphenol, Fettsäure, Fettamin, Fettsäureamid oder Alkansulfonamid verwendbar. Von praktischem Interesse sind die Anlagerungsprodukte von 5 bis 16 mol Ethylenoxid an Kokos- oder Talgefettalkohole, an Oleylalkohol oder an sekundäre Alkohole mit 8 bis 18, vorzugsweise 12 bis 18 C-Atomen sowie an Mono- oder Dialkylphenole mit 6 bis 14 C-Atomen in den Alkylresten. Neben diesen wasserlöslichen Nonionics können aber auch nicht bzw. nicht vollständig wasserlösliche Polyglykolether mit 1 bis 4 Ethylenglykoletherresten im Molekül von Interesse sein, insbesondere, wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykol, Alkylendiaminpolypropylenglykol und Alkylpolypropylenglykole mit 1 bis 10 C-Atomen in der Alkylkette brauchbar, in denen die Polypropylenglykolkette als hydrophober Rest fungiert.

Als ionische Netzmittel kommen quaternäre Ammoniumverbindungen, die zwei vorzugsweise gesättigte Alkylreste mit je 14 bis 26, vorzugsweise 16 bis 20 Kohlenstoffatomen und wenigstens ein quaternäres Stickstoffatom im Molekül enthalten und die den folgenden Formeln entsprechen, in Betracht:

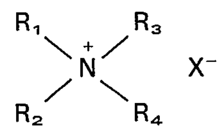
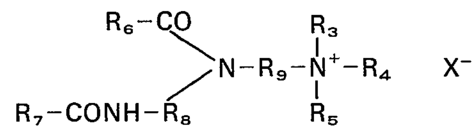
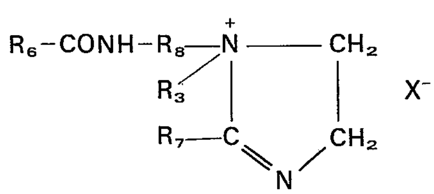
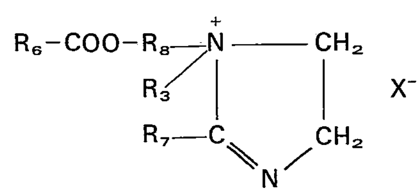
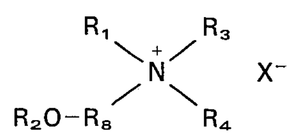
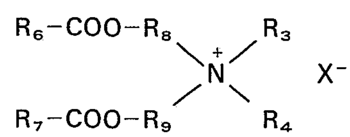

In diesen Formeln bedeuten $R_1$ und $R_2$ vorzugsweise gesättigte Alkylreste mit 14 bis 26, vorzugsweise 16 bis 20 Kohlenstoffatomen; $R_6$ und $R_7$ Alkylreste mit 13 bis 21, vorzugsweise 15 bis 19 Kohlenstoffatomen; $R_3$, $R_4$ und $R_5$ niedere Alkyl- oder Alkylolreste mit 1 bis 4 Kohlenstoffatomen, und $R_8$ und $R_9$ Alkylenreste mit 2 bis 4, oder Hydroxyalkylenreste mit 3 oder 4 Kohlenstoffatomen.

In den oben genannten Formeln bedeutet $X^-$ das Anion einer anorganischen oder organischen Säure mit 1 bis 8 Kohlenstoffatomen. Beispielsweise kommt als Anion $X^-$ der Rest der Salz-, Schwefel-, Essig-, Glykol-, Milch-, Methylschwefel-, Methan-, Ethan- oder Toluolsulfonsäure und so weiter in Betracht; ein besonders bevorzugtes Anion $X^-$ ist das Chloridanion.

Das erfindungsgemässe Verfahren lässt sich mit allen wasserlöslichen Acrylverbindungen durchführen. Es kommen hier in erster Linie in Betracht die Acrylsäure und Methacrylsäure selbst bzw. ihre wasserlöslichen Salze, insbesondere Alkalisalze, gegebenenfalls zusammen mit wasserlöslichen Acrylsäure- oder Methacrylsäureestern. Als Alkoholkomponente kommen in diesem Falle in Betracht Glykol, Propandiol, Glycerin, Trimethylolpropan, die aber nur partiell verestert sein sollen. Bevorzugte wasserlösliche Acrylverbindungen ist Acrylamid. Es ist auch möglich, bei der Telomerisation andere wasserlösliche Monomere wie etwa Vinylpyrrolidon oder auch in geringer Menge in Wasser lösliche Monomere wie N-Methyl oder N-Ethylacrylamid, 2-Acrylamido-2-methylpropansulfonsäure oder Vinylacetat oder Acrylnitril mitzuverwenden.

Je nach gewähltem Verhältnis von Telogen zu Monomer soll der Feststoffgehalt der Reaktionsmischung zwischen 10 und 55, insbesondere 25 und 50 Gew.-% liegen. Es wurde festgestellt, dass das Telogen in höher konzentrierten Monomerlösungen besser zu solubilisieren war als in geringer konzentrierten. Eine günstige Konzentration lag zwischen 30 und 50% an Monomer.

Eine Erhöhung der Reaktionstemperatur beeinflusst den Reaktionsablauf günstig. Geeignete Reaktionstemperaturen liegen zwischen 50°C und dem Siedepunkt der Reaktionsmischung. Der bevorzugte Temperaturbereich liegt zwischen 100°C und dem Siedepunkt der Reaktionsmischung und wenn in geschlossenen Systemen gearbeitet wird, auch geringfügig darüber, beispielsweise zwischen 100 und 130°C.

Für das erfindungsgemässe Verfahren eignen sich als Initiatoren, insbesondere Perverbindungen wie Ammoniumperoxydisulfat, Kaliumperoxydisulfat, Kalium- oder Natriumperoxydiphosphat und Wasserstoffsuperoxid oder in bestimmten Fällen auch Kaliumdichromat, Cer(IV)-Verbindungen, tert.-Butylhydroxyperoxid oder Azoisobuttersäuredinitril oder Bernsteinsäuredodecylchloramid. Bei Verwendung von peroxidischen Katalysatoren kann es zweckmässig sein, zusätzlich noch metallische Aktivatoren zuzusetzen wie etwa Eisensulfat oder Ammoniumeisensulfat. Eine Initiierung der Telomerisation durch andere Radikalbildner wie etwa kurzwelliges Licht oder Neutronen oder Elektronenstrahlung ist prinzipiell möglich.

Das erfindungsgemässe Verfahren kann sowohl chargenweise oder kontinuierlich durchgeführt werden. Dabei können etwa zwei oder drei Lösungen der zur Reaktion notwendigen Komponente hergestellt und kontinuierlich in vorher berechneten Mengen in das Reaktionsrohr eingedrückt werden. Es ist möglich, die gelösten bzw. solubilisierten Reaktionsteilnehmer in der vorgesehenen Menge bereits am Eingang des Rohres vollständig einzuspeisen oder aber eine Komponente, beispielsweise den Initiator, nur teilweise dem zu polymerisierenden Gemisch zuzusetzen und die restlichen Mengen dem reagierenden Gemisch nach Durchlaufen einer gewissen Strecke des Rohres beizufügen. Das Rohr soll aus einem gegenüber dem Reaktionsmedium inerten Metall bestehen. Hier kommen in Frage Metallrohre, beispielsweise aus Edelstahl (V2A, V4A), Nickel, Silber oder auch Silikonkautschuk. Die Dimensionen sollen so gewählt sein, dass ein guter Wärmeaustausch stattfindet. Der Innendurchmesser des Rohres liegt zwischen etwa 3 bis 150 mm und die Länge zwischen 5 bis 150 m. Das Reaktionsrohr befindet sich in einem mit einem thermostatierten, mit Flüssigkeit, z.B. Wasser, gefüllten Behälter. Dieser Behälter wird so eingestellt, dass eine Temperatur zwischen 50 und 120°C eingehalten wird.

Die erfindungsgemäss herstellbaren Telomerisate können bei der Aufbereitung von Wasser, zur Konditionierung von Wasser für Dampfkessel, insbesondere als Belagsinhibitoren, oder auch zur Nachbehandlung von Metalloberflächen (anodisch oxidiertem Aluminium) verwendet werden.

Die nach dem beschriebenen Verfahren hergestellten Telomeren besitzen oberflächenaktive Eigenschaften, wirken emulgierend, dispergierend und stabilisierend. Vorteilhaft können sie z.B. als Telomeremulgator sowie als Kalkseifen- oder Pigmentdispergatoren eingesetzt werden.

Bei der Verwendung als Polymerisationsemulgatoren, z.B. bei der Herstellung von Kunststoff- und Kautschukdispersionen sind die nach dem erfindungsgemässen Verfahren hergestellten Produkte deshalb besonders vorteilhaft, da sie direkt als wässerige Lösungen anfallen und als solche eingesetzt werden können.

So kann man nach einer vorgeschalteten Telomerisation direkt anschliessend eine Emulsionspolymerisation von Monomeren zu Kunststoff- oder Kautschukdispersion ohne Zwischenisolierung des Telomeren durchführen.

Die folgenden Beispiele erläutern die Herstellung der Telomeren nach verschiedenen Methoden.

*Verfahrensweise nach Variante A*

*Beispiele 1 bis 6:*

In einem Dreihalskolben mit Rührer, Rückflusskühler, $N_2$-Zuleitung und 2 Tropftrichtern wurden Mercaptan (Menge in Tabelle 1), 10 g Solubilisierungsmittel und 30 g Wasser vorgelegt und in einem Heizbad von 100°C temperiert. Unter starkem Rühren und $N_2$-Spülung wurden dann Monomere (Menge in Tabelle 1) in wässeriger Lösung und eine Lösung von 200 mg $(NH_4)_2S_2O_8$ in 5 g Wasser als Radikalinitiator während etwa 20 min zu dem unter Rückfluss siedenden Gemisch zugegeben. Nach erneuter Zugabe von 100 mg $(NH_4)_2S_2O_8$ in 2 g Wasser liess man zur Vervollständigung des Umsatzes 30 min bei 100°C Badtemperatur nachreagieren.

Als Mercaptan wurden 1-Mercapto-2-hydroxydodecan und im Beispiel 6 1-Mercaptododecan und als Monomere Acrylsäure und Acrylamid eingesetzt. Der Solubilisierung dienten jeweils 10 g des Addukts von 5 mol Ethylenoxid an 1 mol Talgamin (Beispiele 1 bis 3), des Sulfatierungsprodukts des Addukts von 2 mol Ethylenoxid an Laurylalkohol (Beispiele 5 und 6) und das Polymere nach Beispiel 1 (Beispiel 4).

In der nachfolgenden Tabelle 1 sind in Abhängigkeit von der laufenden Nummer des Beispiels die Molverhältnisse angegeben von Mercaptan zu Acrylsäure und Acrylamid sowie die Menge in Gramm dieser Verbindungen. Es folgen die Gesamtwassermenge, der Telomergehalt in Prozent sowie die spezifische Viskosität der Telomeren. Die Telomeren wurden durch Fällung mit Aceton isoliert und im Vakuumtrockenschrank getrocknet.

*Tabelle 1*

| Beispiel Nr. | Molverhältnis Mercaptan/Acrylsäure/Acrylamid | Mengen (g) | | | Wasser (gesamt) | Telomergehalt (%) | η spez. 1% in 1N-NaNo$_3$ bei 20°C |
|---|---|---|---|---|---|---|---|
| | | Mercaptan | Acrylsäure | Acrylamid | | | |
| 1 | 1 : 8 : 8 | 16,0 | 42,0 | 42,0 | 90,0 | 50,0 | 0,25 |
| 2 | 1 : 10 : 10 | 13,3 | 43,3 | 43,3 | 90,1 | 50,0 | 0,32 |
| 3 | 1 : 12 : 12 | 11,3 | 44,4 | 44,4 | 89,9 | 50,0 | 0,29 |
| 4 | 1 : 8 : 8 | 16,0 | 42,0 | 42,0 | 90,0 | 50,0 | 0,36 |
| 5 | 1 : 8 : 8 | 9,6 | 25,2 | 25,2 | 130,0 | 30,0 | 0,25 |
| 6 | 1 : 12 : 12 | 10,5 | 44,8 | 44,8 | 89,9 | 50,0 | 0,88 |

*Verfahrensweise nach Variante B*

*Beispiele 7 bis 13:*

Verwendet wurde ein ummantelter, thermostatisierbarer Rohrreaktor aus Edelstahl (V4A).

Länge 4,2 m, Durchmesser 0,46 cm.

Die fertige Reaktionsmischung – inklusive 200 mg $(NH_4)_2-S_2O_8$ – wurde in einem Kolben mit Bodentubus vorgelegt und so stark gerührt, dass Durchmischung mit Luft stattfand. Durch den Bodentubus wurde der Ansatz mittels Dosierpumpe in den auf 80°C temperierten Rohrreaktor gepumpt. Die Verweilzeit im Rohrreaktor betrug 15 min. Von dort gelangte die Reaktionsmischung in einen Stickstoff enthaltenden Kolben zur Nachreaktion (30 min bei 100°C).

Die Aufarbeitung erfolgte durch Fällen mit Aceton und Trocknen im Vakuum.

Als Mercaptan wurde in allen Beispielen 1-Mercapto-2-hydroxydodecan eingesetzt. Auf 1 mol des Mercaptans wurden in den Beispielen 7 bis 10 jeweils 10 mol Acrylsäure und 10 mol Acrylamid und in den Beispielen 11 bis 13 jeweils 20 mol Acrylamid bzw. Acrylsäure bzw. Methacrylsäure verwendet. Es wurden zur Solubilisierung eingesetzt.

Beispiele 7 und 8: 10 g Sulfatierungsprodukt des Addukts von 2 mol Ethylenoxid an 1 mol Laurylalkohol.

Beispiel 9: 4 g Sulfatierungsprodukt des Addukts von 30 mol Ethylenoxid an 1 mol Laurylalkohol.

Beispiel 10: 4 g Sulfatierungsprodukt des Addukts von 10 mol Ethylenoxid an 1 mol Laurylalkohol und 6 g Cetyltrimethylammoniumchlorid.

Beispiele 11 bis 13: 10 g des Sulfatierungsprodukts des Addukts von 2 mol Ethylenoxid an 1 mol Laurylalkohol. In der nachfolgenden Tabelle 2 ist wiedergegeben in Abhängigkeit von der laufenden Nummer des Beispiels das Molverhältnis von Mercaptan zu den beiden Monomeren (1 und 2) bzw. dem Monomer. Es folgen die Mengen in Gramm, die spezifische Viskosität und der Gehalt an Feststoff bzw. Wasser des Reaktionsprodukts.

*Vergleichsversuche 1 bis 6*

Die Beispiele 1 bis 6 (Verfahrensweise nach Variante A) wurden erneut durchgeführt, jedoch ohne Solubilisierungsmittel. In allen Fällen entstanden hochviskose, nicht schüttbare, trübe Polymerlösungen. Im Falle von Vergleich 1 bis 5 kristallisierte das 1 Mercapto-2-hydroxydodecan nach einigen Tagen aus. Der Vergleich 6 ergab eine dauernd trübe Flüssigkeit. Die Produkte hatten spezifische Viskositäten in allen Fällen oberhalb von 3,0.

*Tabelle 2*

| Beispiel Nr. | Molverhältnis Mercaptan/ Monomer 1/ Monomer 2 | Mengen (g) | | | | | Telomer-gehalt (%) | η spez. 1% in 1 N-$NaNO_3$ bei 20°C |
|---|---|---|---|---|---|---|---|---|
| | | hydrotrope Substanz | Mercaptan | Monomer 1 | Monomer 2 | Wasser | | |
| 7 | 1:10:10 | 10,0 | 5,3 | 17,5 | 17,5 | 149,7 | 20,0 | 0,33 |
| 8 | 1:10:10 | 4,0 | 5,3 | 17,5 | 17,5 | 155,7 | 20,0 | 1,06 |
| 9 | 1:10:10 | 10,0 | 5,3 | 17,5 | 17,5 | 149,7 | 20,0 | 1,98 |
| 10 | 1:10:10 | 4,0 + 6,0 | 8,0 | 26,0 | 26,0 | 130,0 | 30,0 | 0,36 |
| 11 | 1:20 | 10,0 | 8,0 | 52,0 | — | 130,0 | 30,0 | 0,33 |
| 12 | 1:20 | 10,0 | 8,0 | 52,0 | — | 130,0 | 30,0 | 0,37 |
| 13 | 1:20 | 10,0 | 6,8 | 53,2 | — | 130,0 | 30,0 | 0,28 |

**Patentansprüche**

1. Verfahren zur Telomerisation von wasserlöslichen Monomeren in wässeriger Phase, dadurch gekennzeichnet, dass man praktisch wasserunlösliche Telogene durch Zusatz von solchen Mengen an oberflächenaktiven Verbindungen, die eine hydrotrope Wirkung entfalten, solubilisiert und dann telomerisiert.

2. Verfahren nach Anspruch 1, dadurch gekennzeichnet, dass man, bezogen auf Telogen, 10 bis 150, insbesondere 40 bis 100 Gew.-% an oberflächenaktiven Verbindungen einsetzt.

3. Verfahren zur Telomerisation nach den Ansprüchen 1 und 2, dadurch gekennzeichnet, dass man als Telogene 1 bis 4 Mercaptogruppen sowie 1 bis 2 Hydroxygruppen im Molekül enthaltende Verbindungen verwendet, die ein Alkyl- bzw. Alkarylgerüst von 3 bis 20 Kohlenstoffatomen pro Mercapto- bzw. Hydroxygruppe enthalten.

4. Verfahren zur Telomerisation nach den Ansprüchen 1 bis 3, dadurch gekennzeichnet, dass man als oberflächenaktive Substanzen vorzugsweise ethoxylierte nichtionische Tenside verwendet.

5. Verfahren zur Telomerisation nach den Ansprüchen 1 bis 4, dadurch gekennzeichnet, dass man quaternäre Alkylammoniumverbindungen als oberflächenaktive Substanzen verwendet.

6. Verfahren zur Telomerisation nach den Ansprüchen 1 bis 4, dadurch gekennzeichnet, dass man als oberflächenaktive Substanzen solche verwendet, die sulfatierte Addukte von 2 bis 40 mol Ethylenoxid an primäre oder sekundäre Fettalkohole oder Alkyl-$(C_6-C_9)$-phenole bzw. deren wasserlösliche Salze sind.

7. Verwendung der Telomerisate nach einem der Ansprüche 1 bis 6 als Dispergiermittel für die Herstellung von Polymerlatices bzw. Kautschuklatices.

8. Verwendung der wässerigen Lösung der Verfahrensprodukte nach den Ansprüchen 1 bis 6 als Telomeremulgator.

9. Verwendung der Telomerisate nach einem der Ansprüche 1 bis 6 als Kalkseifendispergator.

10. Verwendung der Telomerisate nach einem der Ansprüche 1 bis 6 als Pigmentdispergatoren.

## Revendications

1. Procédé de télomérisation de monomères solubles dans l'eau en phase aqueuse, caractérisé en ce qu'on solubilise des télogènes pratiquement insolubles dans l'eau par addition de quantités de composés tensio-actifs qui déploient une activité hydrotrope, puis en ce qu'on télomérise.

2. Procédé selon la revendication 1, caractérisé en ce que, par rapport au télogène, on utilise 10 à 150, en particulier 40 à 100% en poids de composés tensio-actifs.

3. Procédé de télomérisation selon les revendications 1 et 2, caractérisé en ce qu'on utilise comme télogènes des composés contenant 1 à 4 groupes mercapto de même que 1 à 2 groupes hydroxy dans la molécule et qui contiennent un squelette alcoyle ou alcaryle de 3 à 20 atomes de carbone par groupe mercapto et respectivement hydroxy.

4. Procédé de télomérisation selon les revendications 1 à 3, caractérisé en ce qu'on utilise comme substances tensio-actives de préférence des tensio-actifs non ioniques éthoxylés.

5. Procédé de télomérisation selon les revendications 1 à 4, caractérisé en ce qu'on utilise des composés d'alcoylammonium quaternaires en tant que substances tensio-actives.

6. Procédé de télomérisation selon les revendications 1 à 4, caractérisé en ce qu'on utilise comme substances tensio-actives celles qui sont des produits d'addition sulfatés de 2 à 40 mol d'oxyde d'éthylène sur des alcools gras primaires ou secondaires ou des alcoyl(en $C_6$-$C_9$)-phénols ou leurs sels solubles dans l'eau.

7. Utilisation des télomères selon l'une des revendications 1 à 6 comme dispersants pour la fabrication de latex de polymère ou des latex de caoutchouc.

8. Utilisation de la solution aqueuse des produits du procédé selon les revendications 1 à 6 comme émulsifiant télomère.

9. Utilisation des télomères selon l'une des revendications 1 à 6 comme dispersants de savons calcaires.

10. Utilisation des télomères selon l'une des revendications 1 à 6 comme dispersants de pigments.

## Claims

1. A process for the telomerization of water-soluble monomers in the aqueous phase, characterized in that substantially water-insoluble telogens are solubilized by the addition of surface-active compounds in quantities sufficient to produce a hydrotropic effect, followed by telomerization.

2. A process as claimed in claim 1, characterized in that the surface-active compounds are used in quantities of from 10 to 150% by weight and more particularly in quantities of from 40 to 100% by weight, based on telogen.

3. A telomerization process as claimed in claims 1 and 2, characterized in that the telogens used are compounds which contain from 1 to 4 mercapto groups and from 1 to 2 hydroxy groups in the molecule and which have an alkyl or alkaryl skeleton of from 3 to 30 carbon atoms per mercapto or hydroxy group.

4. A telomerization process as claimed in claims 1 to 3, characterized in that ethoxylated nonionic surfactants are preferably used as the surface-active substances.

5. A telomerization process as claimed in claims 1 to 4, characterized in that quaternary alkyl ammonium compounds are used as the surface-active substances.

6. A telomerization process as claimed in claims 1 to 4, characterized in that the surface-active substances used are sulfated adducts of from 2 to 40 mol of ethylene oxide with primary or secondary fatty alcohols or alkyl ($C_6$-$C_9$)-phenols or their water-soluble salts.

7. The use of the telomers produced in accordance with any of claims 1 to 6 as dispersants for the production of polymer latices or rubber latices.

8. The use of an aqueous solution of the products obtained by the process claimed in claims 1 to 6 as a telomer emulsifier.

9. The use of the telomers produced in accordance with any of claims 1 to 6 as dispersants for calcium soap.

10. The use of the telomers produced in accordance with any of claims 1 to 6 as pigment dispersants.